# EUROPEAN PATENT APPLICATION

(11) **EP 4 729 225 A1**
(43) Date of publication of application: **22.04.2026**
(21) Application number: 25200781.0
(22) Date of filing: 08.09.2025
(51) Int. Cl.: B23K 20/10, B23K 20/233, B29C 65/00, H01M 4/139

(54) **WELDING DEVICE AND METHOD OF MANUFACTURING ELECTRODE BY USING WELDING DEVICE**

(30) Priority: 13.09.2024 KR 20240126049
(71) Applicant: SAMSUNG SDI CO., LTD., Yongin-si, Gyeonggi-do 17084 (KR)
(72) Inventor: YOON, Jungah, 17084 Yongin-si (KR); JEONG, Taesu, 17084 Yongin-si (KR); MOON, Eunjeong, 17084 Yongin-si (KR); JANG, Hanbyeol, 17084 Yongin-s (KR); SHIN, Eunhyeok, 17084 Yongin-si (KR)
(74) Representative: Maiwald GmbH

(57) **Abstract**

The present application relates to a welding device (1) which includes a driving portion (10) that generates ultrasonic waves, a welding horn (20) connected to the driving portion (10), and an anvil, wherein the welding horn (20) is configured to be positioned on one side of a welding object and the anvil is configured to be positioned on an other side of the welding object, wherein the welding horn (20) and the anvil, together, are configured to pressurize the welding object, wherein the welding horn (20) includes a body portion (21), a welded portion formed along an outer surface of the body portion (21), wherein the welded portion includes a first welded portion formed along the outer surface of the body portion, and a second welded portion formed on one side of the first welded portion. A method of manufacturing an electrode is also described.

## Description

### BACKGROUND

### 1. Field

The present disclosure relates to a welding device and a method of manufacturing an electrode by using the welding device.

### 2. Description of the Related Art

While primary batteries are not designed to be (re)charged, secondary (also known as rechargeable) batteries are designed to be discharged and recharged. Among secondary batteries, low-capacity secondary batteries are widely used in portable, small electronic devices, such as smart phones, feature phones, notebook computers, digital cameras, and camcorders, while high-capacity secondary batteries are widely used as power sources for driving motors in hybrid vehicles and electric vehicles, as well as for storing power (e.g., home and/or utility scale power storage). A secondary battery generally includes an electrode assembly including a positive electrode and a negative electrode, a case accommodating both electrodes, and electrode terminals connected to the electrode assembly.

Electrodes forming the electrode assembly may be formed by welding a metal layer of a composite base material formed of a polymer layer and the metal layer, and a general base material formed of a metal, to each other. However, the metal layer of the composite base material is relatively thin, in the order of several micrometers, resulting in poor the weldability with the general base material.

The information disclosed in this Background section is for enhancement of understanding of the background of the present disclosure. The section may contain information that does not constitute related (or prior) art.

### SUMMARY

Embodiments of the present disclosure provide a welding device for improving the welding strength between base materials by improving the shape of a welding surface when welding electrode base materials, and a method of manufacturing an electrode by using the welding device.

Embodiments of the present disclosure provide a welding device includes a driving portion that generates ultrasonic waves, a welding horn connected to the driving portion to pressurize a welding object, and an anvil disposed opposite to the welding horn and configured to pressurize the welding object together with the welding horn, wherein the welding horn includes a body portion, a welded portion is formed along an outer surface of the body portion, the welded portion includes a first welded portion continuously formed along the outer surface of the body portion, and a second welded portion formed on one side of the first welded portion.

Embodiments of the present disclosure provide a welding device including: a driving portion configured to generate ultrasonic waves; a welding horn connected to the driving portion; and an anvil, wherein the welding horn is configured to be positioned on one side of a welding object and the anvil is configured to be positioned on an other side of the welding object, wherein the welding horn and the anvil, together, are configured to pressurize the welding object, wherein the welding horn includes: a body portion; and a welded portion formed along an outer surface of the body portion, wherein the welded portion includes: a first welded portion formed along the outer surface of the body portion; and a second welded portion formed on one side of the first welded portion.

In an embodiment, the second welded portion may be formed in plurality at constant intervals along a length direction of the first welded portion on the one side of the first welded portion.

In an embodiment, the second welded portion includes a plurality of the second welding portion spaced apart at predetermined intervals.

In an embodiment, a length of the second welded portions along the length direction of the first welded portion may be 8 mm to 10 mm.

In an embodiment, the second welded portion has a length of about 8 mm to about 10 mm.

In an embodiment, the second welded portions may be formed to be in contact with the first welded portion.

In an embodiment, the second welded portion is in contact with the first welded portion.

In an embodiment, the welding horn may include a driving shaft arranged on the one side of the body portion.

In an embodiment, the welding horn further includes a driving shaft on the one side of the body portion.

In an embodiment, the driving shaft may be connected to the driving portion and rotate the welding horn.

In an embodiment, the driving shaft is connected to the driving portion and is configured to rotate the welding horn.

In an embodiment, the body portion may include a cylindrical shape.

In an embodiment, the body portion has a substantially cylindrical shape.

In an embodiment, the welding object may include a first base material and a second base material, and the welding horn and the anvil may pressurize the first base material and the second base material simultaneously.

In an embodiment, the welding object includes a first base material and a second base material, and wherein the welding horn and the anvil, together, are configured to pressurize the first base material and the second base material simultaneously.

In an embodiment, the anvil may include a first body portion, and the first body portion may include a counterpart corresponding to the welded portion of the welding horn.

In an embodiment, the anvil includes a first body portion, and wherein the first body portion includes a counterpart corresponding to the welded portion.

In an embodiment, the counterpart may include a first counterpart and a second counterpart, and the first counterpart may be arranged to correspond to the first welded portion, and the second counterpart may be arranged to correspond to the second welded portion.

In an embodiment, the counterpart includes a first counterpart and a second counterpart, and wherein the first counterpart corresponds to the first welded portion and the second counterpart corresponds to the second welded portion.

Embodiments of the present disclosure provide a method of manufacturing an electrode includes coating an active material on a region of a first base material, arranging a second base material to overlap, in another region other than the region of the first base material, where the active material is coated, ultrasonically welding a region where the first base material and the second base material overlap each other, punching the first base material and the second base material that are welded to each other, and cutting base material tabs of the first base material and the second base material that are punched.

Embodiments of the present disclosure provide a method of manufacturing an electrode including: coating an active material on a first region of a first base material; arranging a second base material to overlap, in a second region other than the first region of the first base material; welding the second region such that the first base material and the second base material are welded to each other; punching the first base material and the second base material; and cutting a base material tab.

In an embodiment, the second base material may be disposed on each of opposite sides of the first base material.

In an embodiment, the second base material is disposed on each side of the first base material.

In an embodiment, the first base material may include a metal layer and a polymer layer.

In an embodiment, the first base material includes a metal layer and a polymer layer.

In an embodiment, the first base material and the second base material may be welded to each other by a welding device including a driving portion that generates ultrasonic waves, a welding horn connected to the driving portion to pressurize a welding object, and an anvil disposed opposite to the welding horn and configured to pressurize a welding object together with the welding horn, wherein the welding horn includes a body portion, a welded portion is formed along an outer surface of the body portion, the welded portion includes: a first welded portion continuously formed along the outer surface of the body portion, and a second welded portion formed on one side of the first welded portion.

In an embodiment, the welding is carried out by a welding device including: a driving portion configured to generate ultrasonic waves; a welding horn connected to the driving portion; and an anvil, wherein the welding horn is configured to be positioned on one side of a welding object and the anvil is configured to be positioned on an other side of the welding object, wherein the welding horn and the anvil, together, are configured to pressurize the welding object, wherein the welding horn includes: a body portion; and a welded portion formed along an outer surface of the body portion, wherein the welded portion includes: a first welded portion formed along the outer surface of the body portion; and a second welded portion formed on one side of the first welded portion.

In an embodiment, the second welded portion may be formed in a plurality at constant intervals along a length direction of the first welded portion on the one side of the first welded portion.

In an embodiment, the second welded portion includes a plurality of the second welding portion spaced apart at predetermined intervals.

In an embodiment, a length of the second welded portions along the length direction of the first welded portion may be 8 mm to 10 mm.

In an embodiment, the second welded portion has a length of about 8 mm to about 10 mm.

In an embodiment, the second welded portion may be formed to be in contact with the first welded portion.

In an embodiment, the second welded portion is in contact with the first welded portion.

In an embodiment, the anvil may include a first body portion, and the first body portion may include a counterpart corresponding to the welded portion of the welding horn.

In an embodiment, the anvil includes a first body portion, and wherein the first body portion includes a counterpart corresponding to the welded portion.

In an embodiment, the counterpart may include a first counterpart and a second counterpart, and the first counterpart may be arranged to correspond to the first welded portion, and the second counterpart may be arranged to correspond to the second welded portion.

In an embodiment, the counterpart includes a first counterpart and a second counterpart, and wherein the first counterpart corresponds to the first welded portion and the second counterpart corresponds to the second welded portion.

In an embodiment, the welding horn and the anvil may pressurize the first base material and the second base material simultaneously.

In an embodiment, the welding horn and the anvil, together, are configured to pressurize the first base material and the second base material simultaneously.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a schematic view showing a welding device according to embodiments of the present disclosure;
FIG. 2 is an enlarged view of region A of FIG. 1 according to embodiments of the present disclosure;
FIG. 3 is a schematic view showing the welding device of FIG. 1 according to embodiments of the present disclosure;
FIG. 4 is an enlarged view of region B of FIG. 1 according to embodiments of the present disclosure;
FIG. 5 is a flowchart showing an electrode manufacturing method according to embodiments of the present disclosure;
FIGS. 6A-6F are schematic diagrams showing the electrode manufacturing method of FIG. 4 according to embodiments of the present disclosure;
FIG. 7 is a schematic view showing an electrode assembly including an electrode manufactured by the electrode manufacturing method of FIG. 4 according to embodiments of the present disclosure; and
FIG. 8 is a schematic view showing a secondary battery including the electrode assembly of FIG. 7 according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

The embodiments described herein can be explained with reference to cross-sectional views and/or plain views as example views of the present disclosure. In the drawing, the thicknesses of films and regions can be exaggerated for effective description of technical contents. Thus, regions presented as an example in the drawings have general properties, and shapes of the exemplified areas can be used to illustrate a specific shape of a device region. Therefore, this should not be construed as limited to the scope of the present disclosure. Although the terms such as first, second, and third are used to describe various components in various embodiments herein, the components should not be limited to these terms. These terms are used only to distinguish one component from another component. Embodiments described and exemplified herein include complementary embodiments thereof. Like reference numerals refer to like elements throughout the specification.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

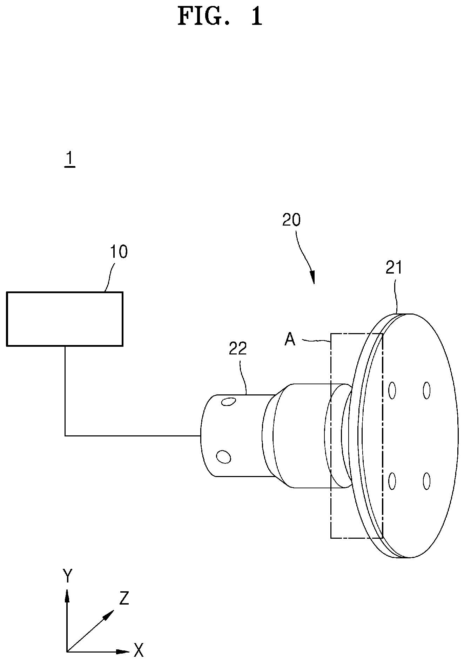

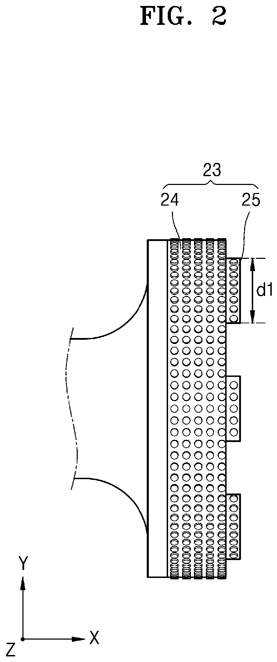

FIG. 1 is a schematic view showing a welding device 1 according to embodiments of the present disclosure. FIG. 2 is an enlarged view of region A of FIG. 1 according to embodiments of the present disclosure.

Referring to FIGS. 1 and 2, a welding device 1 may include a driving portion 10 and a welding horn 20, and the welding horn 20 may include a body portion 21, a driving shaft 22, and a welded portion 23.

The driving portion 10 may be connected to the welding horn 20 and may control operation of the welding horn 20. In an embodiment, the driving portion 10 may convert an about 60 Hz alternating current (AC) into a equal to or greater than about 20 kHz highfrequency current, convert electrical energy into ultrasonic waves, which are mechanical energy, and amplify the ultrasonic waves to transmit the ultrasonic waves to the welding horn 20. In addition, the driving portion 10 may cause the welding horn 20 to rotate, by applying mechanical energy to the driving shaft 22.

The welding horn 20 may include the body portion 21 and the driving shaft 22.

The welded portion 23 may be formed along an outer surface of the body portion 21. The welded portion 23 may include a first welded portion 24 formed continuously along the outer surface of the body portion 21 and a plurality of second welded portions 25 formed in a shape protruding from the first welded portion 24 on one side of the first welded portion 24.

In an embodiment, the body portion 21 may have a cylindrical shape. The first welded portion 24 may be formed in a shape that wraps around or surrounds the outer surface of the cylindrical body portion 21. The plurality of second welded portion 25 may be in contact with the first welded portion 24 and formed at predetermined intervals on one side of the first welded portion 24.

The welded portion 23 formed in this manner may perform ultrasonic welding while simultaneously applying pressure to a welding object.

In an embodiment, the driving portion 10 may transmit mechanical energy to the driving shaft 22 to cause the body portion 21 to rotate. As the driving shaft 22 rotates and the body portion 21 rotates, an even welding pattern may be formed on the welding object.

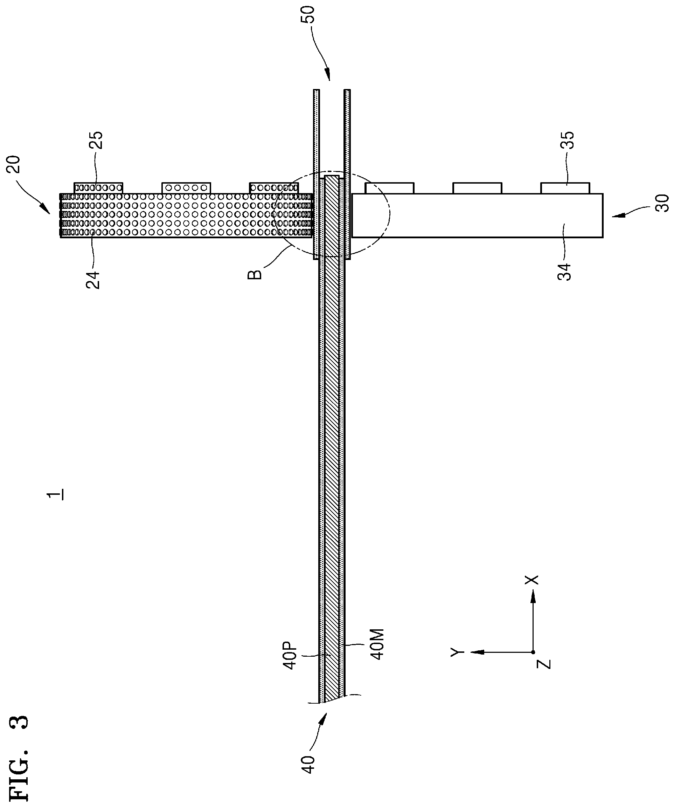

FIG. 3 is a schematic view showing the welding device 1 of FIG. 1 according to embodiments of the present disclosure.

Referring to FIGS. 1 to 3, the welding device 1 may include a welding horn 20 and an anvil 30.

The welding horn 20 may include the body portion 21 and the driving shaft 22, and the welded portion 23 may be formed along the outer surface of the body portion 21. The welded portion 23 may include the first welded portion 24 formed along the outer surface of the body portion 21 and the plurality of second welded portions 25 formed in a shape protruding from the first welded portion 24 on one side of the first welded portion 24.

In an embodiment, the body portion 21 may have a cylindrical shape. The first welded portion 24 may be formed in a shape that wraps around or surrounds the outer surface of the cylindrical body portion 21. The plurality of second welded portion 25 may be in contact with the first welded portion 24 and formed at predetermined intervals on one side of the first welded portion 24.

The anvil 30 may be arranged opposite the welding horn 20 and may include a first body portion.

The first body portion may include a counterpart corresponding to the welded portion 23 of the welding horn 20, and the counterpart may have a smooth shape in which, unlike the welded portion 23, a tip for ultrasonic welding is not formed. In an embodiment, the counterpart may include a first counterpart 34 and a second counterpart 35, and the first counterpart 34 and the second counterpart 35 may have substantially the same shape as the first welded portion 24 and the second welded portion 25 of the welding horn 20, respectively, and may be arranged to correspond to the first welded portion 24 and the second welded portion 25 of the welding horn 20, respectively.

The welding horn 20 and the anvil 30 arranged in this manner may be used to pressurize opposite sides of the welding object and cause the welding object to be ultrasonically welded in a pattern of the first and second welded portions (24 and 25).

Meanwhile, the welding object may include a first base material 40 and a second base material 50.

The first base material 40 may be formed in a form in which a polymer layer 40P is arranged between metal layers 40M, and the second base material 50 may include only a metal layer. In an embodiment, the second base material 50 may be arranged such that a terminal region thereof overlaps with exterior surfaces of the first base material 40, and may be ultrasonically welded to the metal layer 40M of the first base material 40 through the welding horn 20 and the anvil 30.

The metal layer 40M of the first base material 40 and the metal layer of the second base material 50 may include a metal foil including aluminum or an aluminum alloy, a copper foil, a nickel foil, a stainless-steel foil, and a titanium foil, but are not limited thereto.

In an embodiment, the first base material 40 may be used as an electrode plate of a secondary battery. As the first base material 40 may include the polymer layer 40P between the metal layers 40M, due to a difference in elongation between the metal layers 40M and the polymer layer 40P, it may be feasible to control any short-circuits of an electrode happening in the event penetration to a secondary battery occurs. However, due to the insulating properties of the polymer layer 40P of the first base material 40, in order to connect a tab of an electrode base material to a tab of an external strip terminal, welding with respect to the second base material 50 including only a metal may be required.

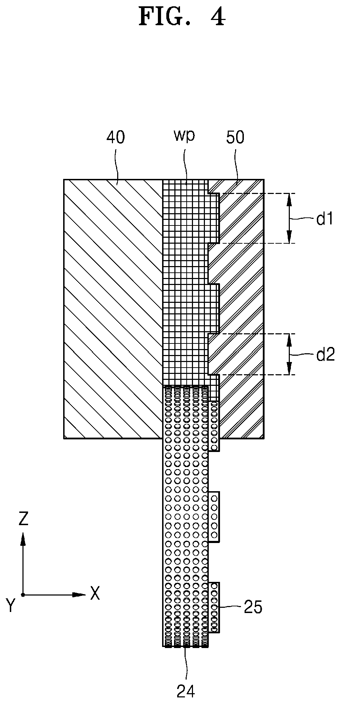

FIG. 4 is an enlarged view of region B of FIG. 1 according to embodiments of the present disclosure.

Referring to FIGS. 3 and 4, a welding pattern wp having substantially the same shape of the first welded portion 24 and the second welded portion 25 of the welding horn 20 may be formed in a region where the first base material 40 and the second base material 50 overlap each other. The first welded portion 24 may form a pattern by welding the region where the first base material 40 and the second base material 50 overlap each other, and the second welded portion 25 may form a pattern by welding a region of the second base material 50. Although not shown in the drawing, the second base material 50 may be arranged and welded on each side of the first base material 40, and on the opposite side of where the welding pattern wp is formed by the welding horn 20, the first counterpart 34 and the second counterpart 35 of the anvil 30 may be arranged to correspond to the first welded portion 24 and the second welded portion 25 of the welding horn 20, respectively, and simultaneously pressurize the first base material 40 and the second base material 50 arranged on each side of the first base material 40, thereby facilitating forming of the welding pattern wp.

As a result, by welding not only the region where the first base material 40 and the second base material 50 overlap each other, but also the region where the second base materials 50 overlap each other, the welding strength between the first base material 40 and the second base material 50 may be increased.

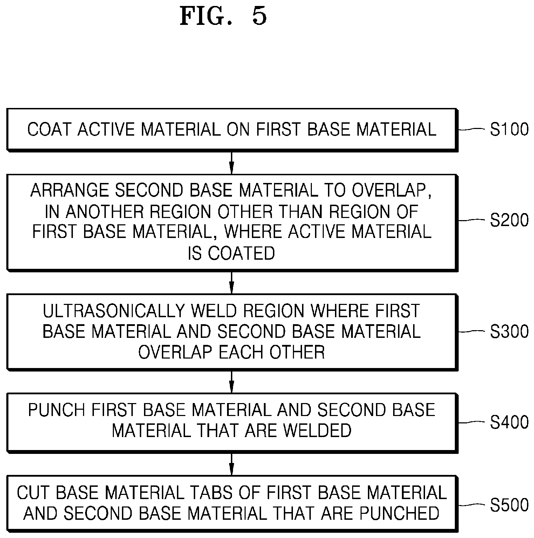

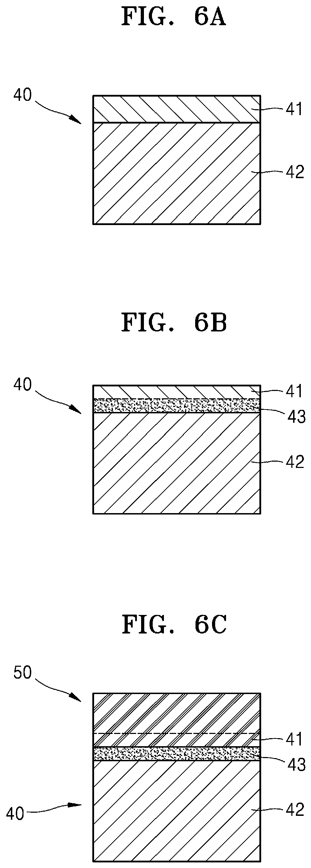

FIG. 5 is a flowchart showing an electrode manufacturing method according to embodiments of the present disclosure. FIGS. 6A-6F are schematic diagrams showing the electrode manufacturing method of FIG. 4 according to embodiments of the present disclosure

Referring to FIG. 5, the electrode manufacturing method may include coating an active material on a first base material (S100), arranging a second base material to overlap in a region other than a region of the first base material where the active material is coated (S200), ultrasonically welding the region where the first base material and the second base material overlap each other (S300), punching the first and second base materials that are welded (S400), and cutting base material tabs of the first base material and the second base material that are punched (S500).

Referring to FIGS. 5 and 6A, in S100 of coating an active material on a first base material, a non-coated portion 41 may be formed in a region of the first base material 40, and an active material 42 may be coated in a region other than the region where the non-coated portion 41 is formed. The active material 42 to be coated may vary depending on the type of electrode, such as a positive electrode or a negative electrode.

In an embodiment, when manufacturing a positive electrode, a compound that enables reversible intercalation and deintercalation of lithium (e.g., lithiated intercalation compound) may be used as the active material 42 coated on one region of the first base material 40. In an embodiment, a composite oxide of lithium and a metal selected from cobalt, manganese, nickel, and a combination thereof may be used.

The composite oxide may include a lithium transition metal composite oxide, and non-limiting examples include lithium nickel-based oxide, lithium cobalt-based oxide, lithium manganese-based oxide, lithium iron phosphate-based compound, cobalt-free nickel-manganese-based oxide, or a combination thereof.

In an embodiment, the composite oxide may include a compound represented by any one of the following chemical formulas: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}Dα(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8) where A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ may include Mn, Al, or a combination thereof.

In an embodiment, when manufacturing a negative electrode, the active material 42 coated on one region of the first base material 40 may include a material capable of reversible intercalation or deintercalation of lithium ions, lithium metal, an alloy of lithium metal, a material with or from which lithium may be doped or dedoped, or a transition metal oxide.

The material capable of reversible intercalation or deintercalation of lithium ions may be a carbon-based negative electrode active material, for example, crystalline carbon, amorphous carbon, or a combination thereof. non-limiting examples of the crystalline carbon include graphite such as natural graphite or artificial graphite, and non-limiting examples of the amorphous carbon include soft carbon or hard carbon, mesophase pitch carbide, calcined coke, and the like.

non-limiting examples of the material with or from which lithium may be doped or dedoped may include a Si-based negative electrode active material or a Sn-based negative electrode active material. The Si-based negative electrode active material may include silicon, a silicon-carbon composite, SiOₓ (0 < x < 2), a Si-based alloy, or a combination thereof.

The silicon-carbon composite may include a composite of silicon and amorphous carbon. According to an embodiment, the silicon-carbon composite may exist in the form of silicon particles and amorphous carbon coated on the surface of the silicon particles.

The silicon-carbon composite may further include crystalline carbon. In an embodiment, the silicon-carbon composite may include a core including crystalline carbon and silicon particles, and an amorphous carbon coating layer arranged on the surface of the core.

The first base material 40 may include a polymer layer and a metal layer disposed on each side of the polymer layer. The metal layer may function as an electrode plate, and the material forming the metal layer may vary depending on the type of electrode to be manufactured, such as a negative electrode or a positive electrode.

In an embodiment, when manufacturing a positive electrode, the metal layer of the first base material 40 may include a metal foil including aluminum or an aluminum alloy. In an embodiment, when manufacturing a negative electrode, the metal layer of the first base material 40 may include a copper foil, a nickel foil, a stainless-steel foil, and a titanium foil, but is not limited thereto.

Referring to FIG. 6B, in an embodiment, when manufacturing a positive electrode, an insulating region may be further formed in a region other than the region of the first base material 40 on which the active material is coated. In an embodiment, an insulating region 43 including polyimide (PI) or ceramic may be additionally formed between the non-coated portion 41 and the active material 42.

Referring to FIGS. 5 and 6C, in S200 in which a second base material may be arranged to overlap, in the region other than the region of the first base material on which the active material is coated, the second base material 50 may be arranged to overlap the region of the first base material 40, in which a non-coated portion 41 is formed. The second base material 50 may include a metal layer, and a material forming the metal layer may be different depending on the type of electrode to be manufactured, such as a negative electrode or a positive electrode.

In an embodiment, when manufacturing a positive electrode, the metal layer of the second base material 50 may include a metal foil including aluminum or an aluminum alloy. In an embodiment, when manufacturing a negative electrode, the metal layer of the second base material 50 may include a copper foil, a nickel foil, a stainless-steel foil, and a titanium foil, but is not limited thereto.

In S300 of ultrasonically welding the region where the first base material and the second base material overlap each other, the first base material 40 and the second base material 50 may be ultrasonically welded to each other by a welding device to form a certain pattern.

The welding device may include a welding horn, and the welding horn may include a body portion and a welded portion.

The welded portion may be formed along an outer surface of the body portion. The welded portion may include the first welded portion formed continuously along the outer surface of the body portion and the plurality of second welded portions 25 formed in a shape protruding from the first welded portion 24 at constant intervals on one side of the first welded portion 24.

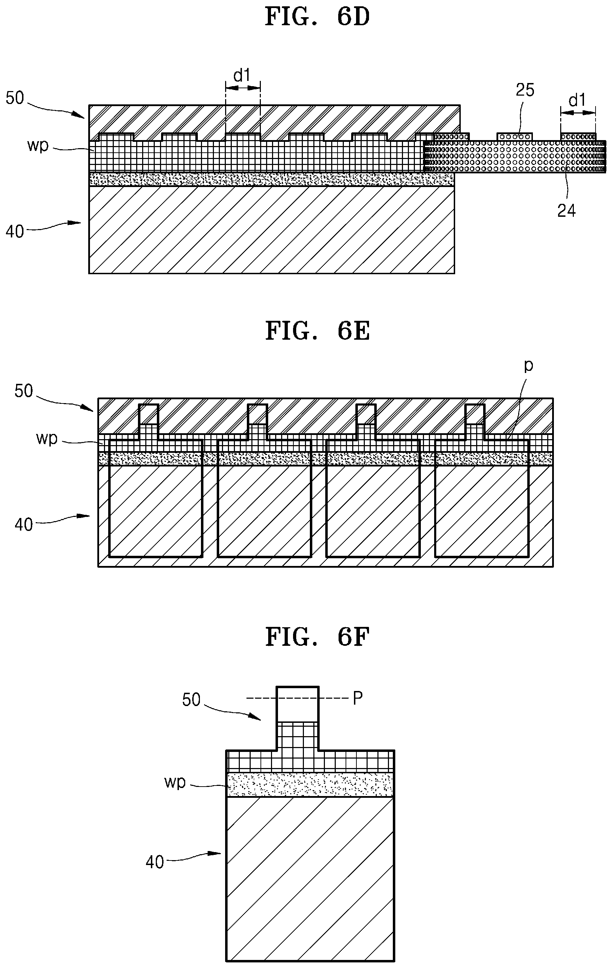

Referring to FIG. 6D, the welding pattern wp having substantially the same shape the first welded portion 24 and the second welded portion 25 of the welding horn of the welding device may be formed in the region where the first base material 40 and the second base material 50 overlap each other. The first welded portion 24 may form a pattern by ultrasonically welding the region where the first base material 40 and the second base material 50 overlap each other, and the second welded portion 25 may form a pattern by ultrasonically welding a region of the second base material 50. Not only the region where the first base material 40 and the second base material 50 overlap each other, but also a portion of the second base material 50 may be additionally ultrasonically welded by the second welded portion 25.

Although not shown in the drawing, the second base material 50 may be arranged and welded on each sides of the first base material 40. On the side opposite to the side where the welding pattern wp is formed by the welding horn, the first counterpart 34 and the second counterpart 35 of the anvil 30 can be arranged to correspond to the first welded portion 24 and the second welded portion 25 of the welding horn 20, respectively, and simultaneously pressurize the first base material 40 and the second base materials 50 arranged on opposite sides of the first base material 40, thereby allowing the welding pattern wp to be easily formed.

This way, not only the region where the first base material 40 and the second base material 50 overlap with each other, but also some areas of the second base material 50 can be additionally welded by the second welded portion 25. Accordingly, overall weldability may be enhanced, and a decrease in the fluidity of the first base material 40 and the second base material 50 and crumples thereof in a punching process may be prevented, thereby reducing the possibility of burrs and thus improving the punching quality.

A length d1 of the second welded portion 25 along the length direction of the first welded portion 24 may be about 8 mm to about 10 mm. When the length d1 of the second welded portion 25 is less than about 8 mm, a region where the second base materials 50 are welded to each other can be reduced, making it difficult to enhance weldability. When the length d1 of the second welded portion 25 exceeds about 10 mm, the region where the second base materials 50 are welded to each other may be broader than a region where a base material tab is formed during a punching process, making it difficult to form the base material tab.

Referring to FIGS. 5 and 6E, in operation S400 of punching the first base material and the second base material that are welded, the first base material 40 and the second base material 50 that are welded may be punched along a shape of a cutting line P.

If the welding of the first base material 40 and the second base material 50 is not performed properly, fluidity increases during a punching process, causing crumples, etc., increasing the possibility of burrs, resulting in reduced punching quality. However, when welding, not only the overlapping region between the first base material 40 and the second base material 50, but also some portions of the second base material 50 by using the welding device according to embodiments of the present disclosure, the weldability of the first base material 40 and the second base material 50 may be enhanced, thereby preventing a decrease in the fluidity and crumples of the first base material 40 and the second base material 50, and reducing the possibility of burrs, thus improving the punching quality.

Referring to FIGS. 5 and 6F, in operation S500 of cutting base material tabs of the first base material and the second base material that are punched, from among the first base material 40 and the second base material 50 that are punched, the second base material 50 on the upper end of the welding pattern wp may form a base material tab. By performing a process of cutting this base material tab along cutting line P, the length may be adjusted as needed.

A region of the base material tab may include a portion of the second base material 50 welded by the second welded portion of the welding horn. This welded region may preliminarily weld the base material tab, thereby increasing uniformity of the cut surface during a cutting process of the base material tab.

As a result, by welding, not only the overlapping region of the first base material 40 and the second base material 50 but also a portion of the second base material 50, by using the first welded portion 24 and the second welded portion 25 of the welding device according to embodiments of the present disclosure, the weldability of the first base material 40 and the second base material 50 may be enhanced. By enhancing the weldability, decrease in the fluidity of and crumples of the first base material 40 and the second base material 50 may be prevented, and thus the possibility of burrs may be reduced, thereby improving the punching quality. Additionally, the quality and performance of the electrode may be improved by improving the punching quality of the electrode manufacturing process.

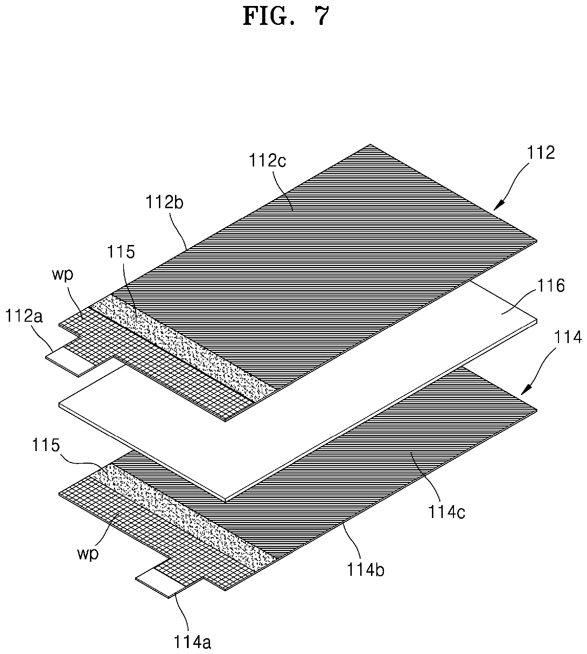

FIG. 7 is a schematic view showing an electrode assembly including an electrode manufactured by the electrode manufacturing method of FIG. 4 according to embodiments of the present disclosure.

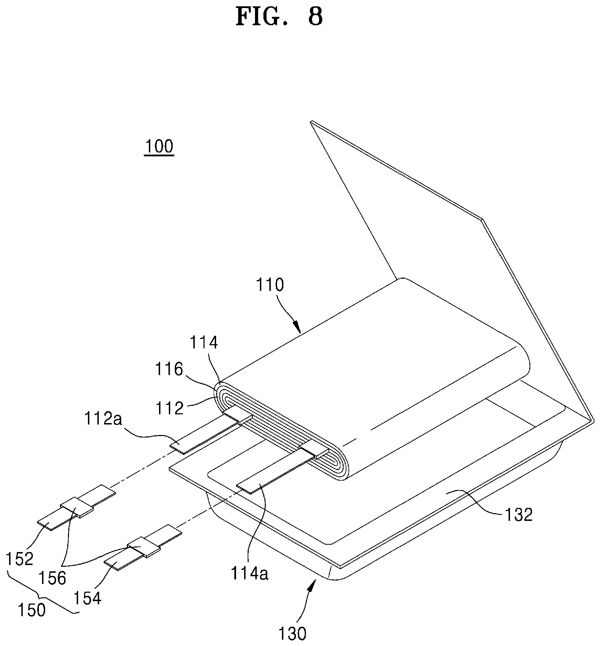

Referring to FIG. 7, the electrode assembly may include a negative electrode plate 112, a positive electrode plate 114, and a separator 116 manufactured using the electrode manufacturing method according to embodiments of the present disclosure. FIG. 8 is a schematic view showing a secondary battery including the electrode assembly 110 of FIG. 7 according to embodiments of the present disclosure.

Referring to FIGS. 7 and 8, the electrode assembly 110 may include the separator 116, and the negative electrode plate 112 and the positive electrode plate 114 with the separator 116 located therebetween, and may be formed by winding, in a jelly-roll shape, or stacking the negative electrode plate 112, the separator 116, and the positive electrode plate 114 formed in a thin plate shape or a film shape. In addition, the electrode assembly 110 may be a stacked type instead of a coil type, although the shape of the electrode assembly 110 is not limited in the present disclosure. Additionally, the electrode assembly 110 may be a Z-stack electrode assembly in which positive and negative electrode plates are inserted on opposite sides of the separator 116 that is folded in a form of a Z-stack. In addition, the electrode assembly 110 may be accommodated in a case by stacking one or more electrode assemblies 110 so that longitudinal sides thereof are adjacent to each other, although the number of electrode assemblies is not limited in the present disclosure. The negative electrode plate 112 includes a negative electrode base material 112b and a negative electrode active material layer 112c arranged on the negative electrode base material 112b. A negative electrode base material tab 112a may be extended outward from a non-coated portion of the negative electrode base material 112b, where the negative electrode active material layer 112c is not located. The negative electrode base material tab 112a is welded to a negative electrode lead 152 of a strip terminal 150 to be electrically connected to the exterior environment. The positive electrode plate 114 includes a positive electrode base material 114b, a positive electrode active material layer 114c arranged on the positive electrode base material 114b, and an insulating layer 115. A positive electrode base material tab 114a may be extended outward from a non-coated portion of the positive electrode base material 114b, where the positive electrode active material layer 114c is not located. The positive electrode base material tab 114a is welded to a positive electrode lead 154 of the strip terminal 150 to be electrically connected to the exterior environment. The insulating layer 115 including PI or ceramic may be arranged on the non-coated portion where the positive electrode active material layer 114c is not arranged. The separator 116 is configured to prevent any short circuits between the negative electrode plate 112 and the positive electrode plate 114, while allowing movement of lithium ions. The separator 116 may include a polyethylene film, a polypropylene film, a polyethylene-polypropylene film, etc.

Referring to FIG. 8, a typical secondary battery 100 includes an electrode assembly 110 and a pouch 130 that accommodates the electrode assembly 110.

The electrode assembly 110 includes a first electrode plate, that is, the negative electrode plate 112, a second electrode plate, that is, the positive electrode plate 114, and the separator 116 located therebetween. The negative electrode plate 112 includes a negative electrode base material tab 112a that is electrically connected to the non-coated portion of the negative electrode, and the positive electrode plate 114 includes the positive electrode base material tab 114a that is electrically connected to the non-coated portion of the positive electrode. The negative electrode base material tab 112a and the positive electrode base material tab 114a are welded to the negative electrode lead 152 and the positive electrode lead 154 of the strip terminal 150 so as to be electrically connected to the exterior environment. A tab film 156 for insulation from the pouch 130 is attached to the negative electrode lead 152 and the positive electrode lead 154.

The pouch 130 is sealed having sealing portions 132 at the edges contact each other while accommodating the electrode assembly 110. The pouch 130 is sealed with the tab film 156 placed between the sealing portions 132. As used herein, a form in which the tab film 156 is attached to each of the negative electrode base material tab 112a and the positive electrode base material tab 114a is referred to as a "separable tab film" (i.e., this sealing structure is referred to as a separable sealing structure).

The sealing portions 132 of the pouch 130 include a thermosetting material, and have a structure in which sealing is achieved by bonding thermosetting layers to each other. Since the thermosetting material typically has weak adhesion to metal, the tab film 156 in the form of a thin film is attached to a tab and fused with the pouch 130.

The present disclosure is not limited thereto, and the case may be configured in various shapes such as a circle or a square. The case may include a metal including aluminum, aluminum alloy, nickel-plated steel, or a laminate film or plastic forming the pouch.

As a result, by using the welding device according to embodiments of the present disclosure, not only the overlapping region of the first base material 40 and the second base material 50 but also some areas of the second base material 50 may be welded, thereby enhancing the weldability of the first base material 40 and the second base material 50. By enhancing the weldability, decrease in the fluidity and crumples of the first base material 40 and the second base material 50 may be prevented, thus the possibility of burrs may be reduced, thereby forming an electrode with improved quality. In addition, as the quality of the electrode is improved, the performance of an electrode assembly including the electrode may be improved, and the performance of a secondary battery to which the electrode assembly is applied may also be improved, including reduced cell resistance.

Although the present disclosure has been described above with respect to embodiments thereof, the present disclosure is not limited thereto.

## Claims

1. A welding device comprising:
a driving portion (10) configured to generate ultrasonic waves;
a welding horn (20) connected to the driving portion (10); and
an anvil (30),
wherein the welding horn (20) is configured to be positioned on one side of a welding object and the anvil (30) is configured to be positioned on an other side of the welding object,
wherein the welding horn (20) and the anvil (30), together, are configured to pressurize the welding object,
wherein the welding horn (20) comprises:
a body portion (21); and
a welded portion formed along an outer surface of the body portion (21),
wherein the welded portion comprises:
a first welded portion (24) formed along the outer surface of the body portion (21); and
a second welded portion (25) formed on one side of the first welded portion (24).

2. The welding device of claim 1, wherein the second welded portion (25) includes a plurality of the second welding portion spaced apart at predetermined intervals.

3. The welding device of claim 2, wherein the second welded portion (25) has a length of about 8 mm to about 10 mm.

4. The welding device of any one of the preceding claims, wherein the second welded portion (25) is in contact with the first welded portion (24).

5. The welding device of any one of the preceding claims, wherein the welding horn (20) further comprises a driving shaft (22) on the one side of the body portion (21).

6. The welding device of claim 5, wherein the driving shaft (22) is connected to the driving portion (10) and is configured to rotate the welding horn (20).

7. The welding device of claim 5 or 6, wherein the body portion (21) has a substantially cylindrical shape.

8. The welding device of any one of the preceding claims, wherein the welding object comprises a first base material (40) and a second base material (50), and wherein the welding horn (20) and the anvil (30), together, are configured to pressurize the first base material (40) and the second base material (50) simultaneously.

9. The welding device of any one of the preceding claims, wherein the anvil (30) comprises a first body portion, and wherein the first body portion comprises a counterpart corresponding to the welded portion.

10. The welding device of claim 9, wherein the counterpart comprises a first counterpart (34) and a second counterpart (35), and wherein the first counterpart corresponds to the first welded portion (24) and the second counterpart corresponds to the second welded portion (25).

11. A method of manufacturing an electrode, comprising:
coating an active material (42) on a first region of a first base material (40);
arranging a second base material (50) to overlap, in a second region other than the first region of the first base material (40);
welding the second region such that the first base material (40) and the second base material (50) are welded to each other;
punching the first base material (40) and the second base material (50); and
cutting a base material tab (112a, 114a).

12. The method of claim 11, wherein the first base material (40) comprises a metal layer (40M) and a polymer layer (40P) and wherein the second base material (50) is disposed on each side of the first base material (40).

13. The method of claim 11 or 12, wherein the welding is carried out by a welding device comprising:
a driving portion (10) configured to generate ultrasonic waves;
a welding horn (20) connected to the driving portion (10); and
an anvil (30),
wherein the welding horn (20) is configured to be positioned on one side of a welding object and the anvil (30) is configured to be positioned on an other side of the welding object,
wherein the welding horn (20) and the anvil (30), together, are configured to pressurize the welding object,
wherein the welding horn (20) comprises:
a body portion (21); and
a welded portion formed along an outer surface of the body portion (21),
wherein the welded portion comprises:
a first welded portion (24) formed along the outer surface of the body portion (21); and
a second welded portion (25) formed on one side of the first welded portion (24).

14. The method of claim 13, wherein the second welded portion (25) includes a plurality of the second welding portion spaced apart at predetermined intervals.

15. The method of claim any one of the claims 11 to 14, wherein the welding horn (20) and the anvil (30), together, are configured to pressurize the first base material (40) and the second base material (50) simultaneously.
